# EUROPÄISCHE PATENTSCHRIFT

(11) **EP 3 558 634 B1**
(45) Veröffentlichungstag und Bekanntmachung des Hinweises auf die Patenterteilung: **11.05.2022**
(21) Anmeldenummer: 17838119.0
(22) Anmeldetag: 01.12.2017
(51) Int. Cl.: B29C 64/106, B29C 35/00, B29C 64/295, B33Y 10/00, B33Y 30/00, B33Y 40/00

(54) **VERFAHREN ZUM GENERATIVEN HERSTELLEN EINES DREIDIMENSIONALEN OBJEKTES AUS EINEM DURCH ABKÜHLUNG VERFESTIGBAREN MATERIAL MIT EINER TEMPERATURABHÄNGIGEN VISKOSITÄT**
METHOD FOR THE GENERATIVE PRODUCTION OF A THREE-DIMENSIONAL OBJECT FROM A MATERIAL WHICH CAN BE SOLIDIFIED BY COOLING AND WHICH HAS A TEMPERATURE-DEPENDENT VISCOSITY
PROCÉDÉ POUR LA FABRICATION ADDITIVE D'UN OBJET TRIDIMENSIONNEL EN UNE MATIÈRE POUVANT ÊTRE SOLIDIFIÉE PAR REFROIDISSEMENT PRÉSENTANT UNE VISCOSITÉ DÉPENDANT DE LA TEMPÉRATURE

(30) Priorität: 21.12.2016 DE 102016125166
(43) Veröffentlichungstag der Anmeldung: 30.10.2019
(73) Patentinhaber: Ernst-Abbe-Hochschule Jena, 07745 Jena (DE)
(72) Erfinder: BLIEDTNER, Jens, 07745 Jena (DE); MÖHWALD, Michael, 98693 Ilmenau (DE); HOPF, Andreas, 07749 Jena (DE)
(74) Vertreter: Schaller, Renate
(86) Internationale Anmeldenummer: PCT/DE2017/101038
(87) Internationale Veröffentlichungsnummer: WO 2018/113825

(56) Entgegenhaltungen:
- US-A1- 2015 314 529
- US-A1- 2016 354 977

## Beschreibung

Generative Herstellungsverfahren stellen eine Möglichkeit zur Erzeugung von dreidimensionalen Objekten (nachfolgend Bauteile) dar, die sich von klassischen Herstellungsverfahren signifikant unterscheiden. Die Grundidee ist dabei, ein Bauteil durch das Aneinander- und Aufeinanderfügen von Materialmengen herzustellen, anstatt durch das Entfernen von Material, wie es beispielsweise bei spanenden Verfahren wie Bohren, Drehen und Fräsen der Fall ist. Das Aneinander- und Aufeinanderfügen von Materialmengen spiegelt damit den additiven bzw. generativen Charakter wider und führt zu der Bezeichnung der generativen bzw. additiven Herstellungsverfahren.

Eine Klassifizierung der generativen Fertigungsverfahren kann auf Grund des Zustandes des Ausgangsmaterials sowie dessen Zuführung vorgenommen werden. Das Ausgangsmaterial kann in flüssigem Zustand, als Pulver oder als Festkörper vorliegen.

Eine Form der Zuführung ist das Bereitstellen des Ausgangsmaterials im Pulver- oder Fluidbett. Vertreter dieser Gattung von Herstellungsverfahren sind das selektive Lasersintern (SLS) und Laserschmelzen (SLM) sowie die Stereolithografie (SLA). Bei SLS- und SLM- Verfahren wird mit Hilfe eines Rakels neues Material in den Bearbeitungsraum transportiert. Durch lokales Aufschmelzen mittels einer Laserquelle werden einzelne Pulverkörner zu einem Bauteil aufgebaut. Pulver, welches nicht für den Bauteilaufbau verwendet wurde, wird abschließend entfernt und kann für die Herstellung weiterer Bauteile wiederverwendet werden. Beim SLA-Verfahren wird mittels ultraviolettem Licht eine photopolymere Flüssigkeit schichtweise ausgehärtet und aufgetragen.

Eine andere Form der Zuführung ist das selektive Positionieren von diskreten Materialmengen aneinander und übereinander, um so lagenweise das Bauteil herzustellen. Hierfür werden aus einem Extruder, im weitesten Sinne, Materialmengen in einem fluiden Zustand (nachfolgend Fluid) auf einen Träger portioniert abgegeben, weshalb diese Verfahren Extrusionsverfahren darstellen.

Ein Verteter dieser Gattung von Herstellungsverfahren ist das Fused Deposition Modeling (FDM), was z.B. neben einer hierfür geeigneten Vorrichtung in der DE 690 33 809 T2 offenbart ist. Die Vorrichtung umfasst einen gegenüber einer Trägerplatte auf der das Bauteil aufgebaut wird, in x-, y-, und z-Richtung eines karthesichen Koordinatensystems, relativ bewegbaren Abgabekopf. Das Ausgangsmaterial (dort Zuführmaterial) wird dem Abgabekopf in Form eines Stabes oder eines flexiblen Stranges zugeführt, in diesem auf seinen Schmelzpunkt erwärmt und als fließfähiges Fluid über eine Düse abgegeben. Zum Zweck der Erwärmung ist eine geregelte Widerstandsheizvorrichtung vorhanden, die mit einem Thermoelement verbunden ist, um das Ausgangsmaterial nur wenig oberhalb des Schmelzpunktes zu erwärmen. Um zu sichern, dass das Ausgangsmaterial als Fluid durch die Düse des Abgabekopfes ausgestoßen wird, ist eine ergänzende, die Düse temperaturgeregelt beheizende elektrische Heizvorrichtung vorhanden. Die Volumenrate des abgegebenen Fluides wird über den Vorschub des flexiblen Stranges gesteuert. Je kleiner der Durchmesser des flexiblen Stranges ist, desto genauer kann die Volumen-Strömungsgeschwindigkeit der Abgabe des Fluides gesteuert werden. Die effektive Ein/Aus-Fluidabgabe kann einfach durch das Anhalten der Vorschubmotoren erreicht werden. Eine genaue Temperatursteuerung, auf die der flexible Strang im Abgabekopf erwärmt wird, unterstützt außerdem das Regeln seiner Strömung.

Indem das Ausgangsmaterial auf eine Temperatur nur minimal oberhalb seines Schmelzpunktes erwärmt wird, wird es sich im Wesentlichen sofort verfestigen, wenn es bei Zimmertemperatur abgegeben wird. Wird, um dickere Lagen zu bilden, Fluid über einen größeren Düsenquerschnitt abgegeben, kann ein Kühlmittel, wie z. B. Wasser, Luft oder Freon auf oder im Zusammenhang mit der Trägerplatte verwendet werden, um zu sichern, dass sich das Fluid sofort nach Abgabe verfestigt. Der Abgabekopf kann mehrere Zuführkanäle umfassen, in denen Stränge oder Stäbe z.B. unterschiedlicher Farbe zugeführt werden. Die Zuführkanäle sind alternativ über jeweils ein geöffnetes Absperrventil mit jeweils einem beheizten Durchflusskanal verbunden, in denen abwechselnd ein Fluid gebildet und über die Düse abgegeben wird.

Nachteilig beim FDM-Verfahren ist, dass das Ausgangsmaterial als Halbzeug in Form eines flexiblen Stranges oder eines Stabes vorliegen muss, um durch dessen Zuführung einen Ausstoß von Fluid aus der Düse zu bewirken. Zur Herstellung solcher Halbzeuge wird festes Material verflüssigt und durch einen urformenden Prozess wiederum in einen festen Zustand umgewandelt. Im eigentlichen FDM-Verfahren wird dieses Halbzeug erneut verflüssigt. Der urformende vorangeschaltete Prozess ist somit nur verfahrensbedingt, nicht produktbedingt, notwendig und stellt somit einen zusätzlichen Kosten- und Zeitaufwand dar. Darüber hinaus ist das Verfahren auf die Verwendung von Thermoplasten beschränkt. Duroplaste, also Kunststoffe, die nach ihrer Aushärtung nicht mehr verformt werden können, scheiden hierfür aus. Im Vergleich zu der Vielzahl technischer Kunststoffe ist das verwendbare Materialspektrum für FDM-Verfahren damit stark eingeschränkt.

Mit einer Vorrichtung gemäß der vorgenannten DE 690 33 809 T2 können, ebenso wie mit anderen gattungsgleichen Vorrichtungen, mit denen der Vorschub des Ausgangsmaterials durch das Nachführen von festen Material realisiert wird, keine hohen Drücke auf das Fluid wirkend aufgebaut werden. Der maximal erzeugbare Druck und die temperatur- und materialabhängige Viskosität des Fluides begrenzen den Kanaldurchmesser der Düse, über die das Fluid bei Einwirkung dieses maximalen Druckes abgegeben wird und deren Strömungswiderstand zu überwinden ist, nach unten. Da das Fluid eine so hohe Viskosität aufweist, dass es allein durch die Schwerkraft den Strömungswiderstand der Düse nicht überwinden kann, tritt das Fluid idealerweise erst und nur solange durch die stets geöffnete Düse aus, solange das Fluid einem ausreichend hohen Druck ausgesetzt ist.

Weitere neben dem FDM-Verfahren bekannte Extrusionsverfahren sind z.B. das Freeze-Form Extrusion Fabrication (FEE), das Multiphase Jet Solidification (MJS) und das Solid Free-form Fabrication (SFF). Die Funktionsweise ist ebenfalls an bestehende Extrusion-Verfahren angelehnt. Die Hauptunterschiede zwischen diesen Verfahren und dem FDM-Verfahren sind die Art des Ausgangswerkstoffes und der Zuführungseinrichtung.

Der Ausgangsmaterial kann in einer Pulver-Binder-Mischung oder als verflüssigbares Material vorliegen. Das in einem Reservoir gespeicherte Ausgangsmaterial wird auf eine Bearbeitungstemperatur erhitzt, und unter Zuhilfenahme einer Druckeinheit wird das aufgeschmolzene Ausgangsmaterial als Fluid aus der Düsenöffnung befördert.

Nachteilig ist auch hier die stets offene Düsenöffnung. Ungewolltes Austreten des Fluides ist möglich. Ein aufwändiges Mess- und Reglungssystem zur Koordination der Steuerung der Heizung und der Druckeinheit ist erforderlich, um das Fluid durch die Düsenöffnung zeitlich gsteuert abzugeben. Das heißt die konstante Temperatur, auf der das Fluid gehalten wird und welche die Viskosität des Fluides bestimmt, und der Druck, der auf das Fluid wirkt, um es duch die Düsenöffnung abzugeben, müssen aufeinander abgestimmt eingestellt werden.

Aus der vorgenannten DE 690 33 809 T2 sind ein Gerät und ein Verfahren zum Erzeugen dreidimensionaler Objekte bekannt, bei welchen ein in fester Form vorliegendes Ausgangsmaterial, z.B. in Form eines flexiblen Stranges, in eine flüssige Form überführt wird, bevor es über ein Düse abgegeben wird. Dazu wird über einen Vorschubmechanismus das Ausgangsmaterial in einen Durchflusskanal geleitet, in dem über Heizelemente, welche aus dem Spritzgussbereich bekannt sind, das Ausgangsmaterial in eine flüssige Form mit einer vorbestimmten Temperatur (Zuführmaterial) oberhalb seiner Verfestigungstemperatur überführt und durch eine Düse abgeben wird. Um zu sichern, dass das Zuführmaterial bei der gewünschten vorbestimmten Temperatur ausgestoßen wird, ist eine ergänzende elektrische Heizvorrichtung an der Düse vorgesehen. Die den Durchflusskanal beheizenden Heizelemente und die Heizeinrichtung der Düse sind jeweils über eine Steuereinrichtung regelbar. Die Volumenrate (Abgabevolumen des verflüssigten Ausgangsmaterials durch die Düse pro Zeiteinheit) wird über den Vorschub des Stranges gesteuert. Durch die Unterbrechung des Vorschubes wird auch die Abgabe unterbrochen.

Aus der DE 10 2010 044 268 A1 sind ein weiteres gattunggleiches Verfahren und eine dazu geeignete Vorrichtung bekannt, bei dem verfestigbares Material in flüssiger Form durch sequentielles Austragen von diskontinuierlichen Tropfen abgegeben wird. Dazu wird das verfestigbare Material in die fluide Phase plastifiziert und in einem Materialspeicher mit einer taktbaren Austrageeinheit eingebracht. Von dort wird das Material tropfenweise, mittels der Austrageeinheit in Richtung auf einen Objektträger, auf dem ein dreidimensionales Objekt entstehen soll, ausgetragen Die Austrageeinheit ist Teil einer an sich in der Spritzgießtechnik dem Grunde nach bekannten Plastifizierungseinheit, die zugleich auch den unter Druck setzbaren Materialspeicher zum Einbringen des Fluides umfasst. Der Druck auf das Fluid im Materialspeicher erzeugt in direkter Kopplung den diskontinuierlichen Tropfen. Die Portionierung erfolgt mittels eines taktbaren Verschlussmittels der Austrageeinheit, die z.B. mit einer Düsennadel oder dergleichen als Verschlussmittel versehen ist.

Aus der DE 10 2009 030 099 B4 ist bekannt, dass ein taktbares Verschlussmittel für eine Auslassöffnung gemäß der vorgenannten DE 10 2010 044 268 A1 als ein elastisch verformbares Festkörpergelenk ausgeführt sein kann, an dem die Düsennadel angehängt über einen Aktuator auslenkbar ist. Der Aktuator kann z.B. als Rotorexzenter, Direktmagnet oder Piezoelement ausgebildet sein kann. Der auf das Fluid im Materialspeicher erzeugte Druck kann z.B. über eine Förderschnecke erzeugt werden.

Die CN 105291442 A offenbart einen Drucker und ein dreidimensionales, generatives Druckverfahren bei dem ein Druckkopf und die damit verbundene Düse zur Abgabe eines extrudierten Materials schichtweise entlang einer voreingestellten Fahrbahn geführt wird. Der Drucker umfasst eine Laservorrichtung mit der der Umgebungsbereich der voreingestellten Fahrbahn der Düse bestahlt wird, um die gerade entstehende Schicht und vorteilhaft auch die zuvor extrudierte Schicht weiterhin zu erwärmen. Die Laservorrichtung ist mit der Düse verbunden und enthält einen Drehsitz an dem ein Lasersender oder zwei sich symmetrisch gegenüber liegend angeordnete Lasersender befestigt sind. Der Drehsitz wird bezogen auf die Vorschubrichtung des Druckkopfes jeweils so um die Düse gedreht, dass ein von einem der Lasersender emitierter Laserstrahl hinter der Düse auf die gerade extrudierte Schicht und ein von dem anderen Lasersender emitierter Laserstrahl auf die zuvor extrudierte Schicht gerichtet wird. Durch diese Erwärmung kann die Haftfähigkeit der beiden Schicht verbessert werden. Die Laserstrahlung hat keinen Einfluss auf die Steuerung des Ausstoßes des Materials aus dem Druckkopf durch die Düse.

Aus der US 2016/0354977 A1 ist ein Schmelzfaserextruder bekannt, dessen Düse, die in eine Schmelzkammer übergeht, durch die Einwirkung von Laserstrahlung kontaktfrei beheizt wird. Der Schmelzkammer wird Ausgangsmaterial in Form von Schüttgut zugeführt. In der Düse und der Schmelzkammer bildet sich durch die Einwirkung der Laserstrahlung auf die Düse eine Schmelzzone aus, in der das Ausgangsmaterial verflüssigt wird, wobei sich ein Temperaturgradient entlang der Düse ausbildet. Das Ausgangsmaterial wird dabei soweit erhitzt, bis es bei gegebenem Druck aus der Düse austritt. Um den Austritt der Schmelze zu beenden, muss die Düse aktiv gekühlt werden.

Nachteilig an diesem Verfahren ist, dass sich der Zeitpunkt des Austritts der Schmelze nicht sehr genau steuern lässt, da die Geschwindigkeit der Überführung des Schüttgutes in eine Schmelze mit einer Temperatur, bei der sie bei einem gegebenen Druck aus der Düsenöffnung austritt, vergleichsweise lang ist und dadurch insbesondere durch Wärmeleitung beeinflusst wird. Auch ist die Zeitdauer zwischen dem Einschalten der Laserquelle und dem Beginn des Durchtritts der Schmelze durch die Düse nicht reproduzierbar, da sich das Ausgangsmaterial in Abhängigkeit von der Dauer der Ausschaltzeit der Laserquelle unterschiedlich abkühlt, sodass ein exakter Austrittszeitpunkt nicht steuerbar ist.

Die Aufgabe der Erfindung besteht darin, ein Verfahren zu finden, mit dem sich der Zeitpunkt des Austritts einer Schmelze (Teilvolumina eines Fluides) genau steuern lässt. Für ein Verfahren, bei dem das durch Abkühlung verfestigbare Material als Fluid in wenigstens einem Materialspeicher, der eine Düse mit einer Düsenöffnung aufweist, bei einer vorgegebenen Temperatur und unter einem vorgegebenen Druck gehalten wird und die Düse und ein Objektträger, auf dem das dreidimensionale Objekt hergestellt werden soll, zueinander relativ dreidimensional bewegt werden, wobei steuerbar durch die Düsenöffnung der Düse Teilvolumina des Fluides auf den Objektträger abgegeben wird, wird die Aufgabe der Erfindung gelöst, indem zum Zweck der gesteuerten Abgabe der Teilvolumina des Fluides die Düse unabhängig vom Materialspeicher mit wenigstens einer strahlübertragenenden Einheit beheizt wird, sodass mittels eines zeitlich und/oder leistungsgesteuerten Energieeintrages durch eine Laserstrahlung wenigstens einer Laserstrahlungsquelle die Temperatur eines Teilvolumens des Fluides auf eine Durchlasstemperatur oberhalb der vorgegebenen Temperatur erhöht wird, bei der die Viskosität des an der Düse angrenzenden Teilvolumens so gering ist, dass das Teilvolumen unter dem vorgegebenen Druck durch die Düsenöffnung ausgestoßen wird. Der gesteuerte Energieeintrag kann über die Steuerung der Laserleistung der wenigstens einen Laserstrahlungsquelle erfolgen, um über die Höhe der in die Düse eingetragenen Strahlungsintensität die Geschwindigkeit der Aufheizung des Teilvolumens zu beeinflussen.

Alternativ kann der gesteuerte Energieeintrag über die Steuerung der Emissionsdauer der Laserstrahlungsquelle erfolgen, sodass ununterbrochen eine Vielzahl von Teilvolumina ausgestoßen werden.

Vorteilhaft werden zeitgleich die Düsen mehrerer Materialspeicher jeweils mit der Laserstrahlung beaufschlagt wobei über deren Düsenöffnungen jeweils Teilvolumina in eine Mischdüse ausgestoßen werden.

Dabei können über die einzelnen Düsenöffnungen unterschiedlich große Teilvolumina abgegeben werden, was über einen unterschiedlichen Energieeintrag in die jeweiligen Düsen gesteuert wird und wodurch ein Mischungsverhältnis einstellbar ist.

Vorteilhaft werden die durch die Düsenöffnung und damit die ausgetretenen Teilvolumina gekühlt, bevor sie auf dem Objektträger oder dem dort sich aufbauenden dreidimensionalen Objekt auftreffen.

Es ist auch von Vorteil, die Temperatur der Düse bzw. der Düsen zu erfassen und die erfassten Temperaturwerte als Regelgrößen für die Steuerung des jeweiligen Energieeintrages zu verwenden, um die Volumenrate des abgegebenen Fluides pro Düse zu regeln.

Die Erfindung wird nachfolgend an Ausführungsbeispielen anhand von Zeichnungen näher erläutert. Hierzu zeigen:
Fig. 1 eine Prinzipskizze einer nicht beanspruchten Vorrichtung und
Fig. 2a-2c verschiedene vorteilhafte nicht beanspruchte Düsenausführungen.

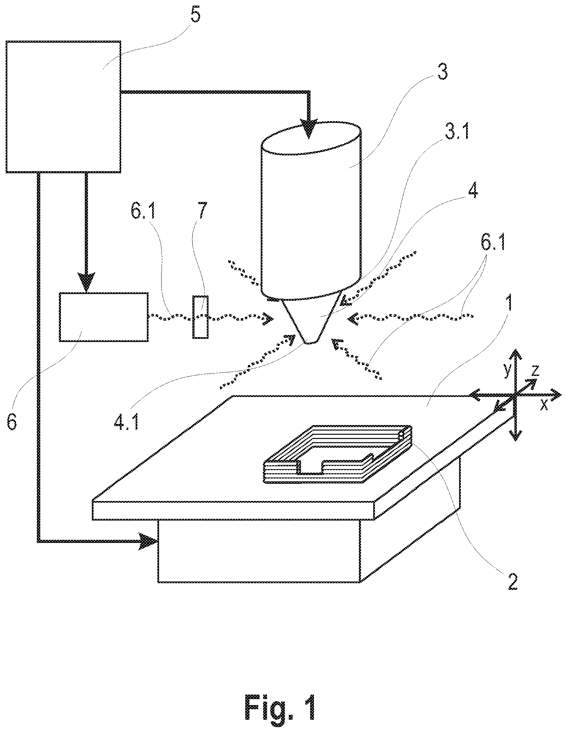

Eine zur Durchführung des erfindungsgemäßen Verfahrens nicht beanspruchte Vorrichtung, gezeigt in Fig. 1, enthält im Wesentlichen einen Objektträger 1, auf dem ein oder mit der gleichen Vorrichtung nacheinander auch mehrere dreidimensionale Objekte 2 generiert werden können, und einen Materialspeicher 3, der oberhalb des Objektträgers 1 angeordnet ist. Der Objektträger 1 und der Materialspeicher 3 und damit eine in dessen Boden 3.1 vorhandene Düse 4 sind zueinander dreidimensional relativ bewegbar, sodass die von der Düse 4 pro Abgabezyklus abgegebenen Teilvolumina eines im Materialspeicher 3 vorhanden Volumens von fluidem Ausgangsmaterial (nachfolgend Fluid) neben- und übereinander auf dem Objektträger 1 entsprechend der Ansteuerung der Relativbewegung platziert werden können, um das dreidimensionale Objekt 2 schichtweise aufzubauen. Zur Steuerung des Bewegungsablaufes und der Vorschubgeschwindigkeit der Relativbewegung zwischen dem Materialspeicher 3 und dem Objektträger 1 ist ein Steuermittel 5 vorhanden.

Es sind Mittel vorhanden, mit denen auf das im Materialspeicher 3 vorhandene Fluid ein vorgegebener Druck erzeugt wird, und Mittel zum Beheizen, mit denen das Fluid auf eine vorgegebene Temperatur erwärmt und auf dieser gehalten werden kann, so dass es in einer flüssigen Phase gehalten wird.

Die Mittel zum Beheizen sind z.B. in oder an der Wand des Materialspeichers 3 vorhandene Heizwendel, in denen ein Heizmedium geführt wird oder die elektrisch beheizt werden.

Die Mittel zur Erzeugung eines Druckes in dem Materialspeicher 3 können z.B. eine Förderschnecke oder ein Kolben sein, die hydraulisch oder pneumatisch angetrieben werden.

Die Düse 4 weist eine Düsenöffnung 4.1 auf, über die das Fluid gesteuert abgegeben wird.

Soweit unterscheidet sich eine Vorrichtung zur Durchführung des erfindungsgemäßen Verfahrens nicht von gattungsgleichen Vorrichtungen des Standes der Technik.

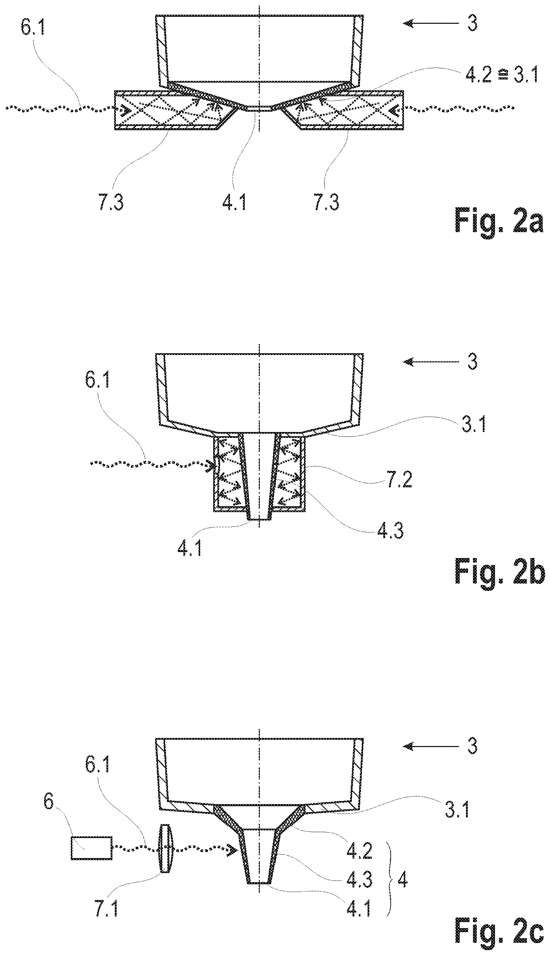

Es ist wenigstens eine Laserstrahlungsquelle 6 vorhanden, die eine Laserstrahlung 6.1 abgibt, die zur Düse 4 geführt wird, um die Düse 4 unabhängig von dem Materialspeicher 3 zu beheizen. Zur Führung der Laserstrahlung 6.1 auf die Düse 4 ist hierfür wenigstens eine strahlübertragende Einheit 7 vorhanden. Bevorzugt handelt es sich hierbei um ein abbildendes System 7.1, wie in Fig. 2c gezeigt, welches die Laserstrahlungsquelle 6 auf der Oberfläche der Düse 4 mit einem vorgegebenen Abbildungsmaßstab abbildet. Durch Veränderung des Abbildungsmaßstabes oder durch eine defokusierte Abbildung der Laserstrahlungsquelle 6 kann die Querschnittsgröße des Laserstrahls beim Auftreffen auf der Oberfläche der Düse 4 verändert werden. Im einfachsten Fall kann es sich bei der strahlübertragenden Einheit 7 um eine unmittelbar mit einer Laserdiode, die als Laserstrahlungsquelle 6 verwendet wird, verbundene Linse handeln. Die Laserstrahlung 6.1 kann auch über wenigstens ein Strahlrohr 7.3, wie in Fig. 2a gezeigt, in dem sich die Intensitätsverteilung durch Mehrfachreflexion homogenisiert oder über Spiegelanordnungen, z.b. einen Umfangsspiegel 7.2, wie in Fig. 2b gezeigt, auf die Düse 4 geführt werden.

In Verbindung mit einer hohen Wärmeleitfähigkeit des Materials der Düse 4 kann die Homogensierung der Wärmeverteilung in der Düse 4 durch einen möglichst homogenen Eintrag der Strahlungsintensität positiv beeinflusst werden, um ein an der Oberfläche der Düse 4 angrenzendes Teilvolumen des Fluides möglichst homogen auf eine Durchlasstemperatur (Temperatur, bei der das Ausgangsmaterial eine Viskosität annimmt, mit der bei dem vorgegebenen Druck und der gegeben Größe der Düsenöffnung 4.1 das Teilvolumen durch die Düsenöffnung 4.1 ausgestoßen wird) zu erwärmen.

Die Geschwindigkeit der Erwärmung kann auch über die Leistung der Laserstrahlungsquelle 6 und damit die auftreffende Strahlungsintensität beieinflusst werden.

Davon ausgehend, dass das Teilvolumen des Fluides bei Erreichen der Durchlasstemperatur ausgestoßen wird und anschließend ein sich an die Düse 4 anlegendes nachfließendes Teilvolumen über die Düse 4 erwärmt wird, kann über die Leistung der Laserstrahlungsquelle 6 die Volumenrate, das heißt die Menge der über eine Zeit ausgestoßenen Teilvolumina, beeinflusst werden. Dabei erfolgt der Ausstoß der Teilvolumina während eines Abgabezykluses quasi kontinuierlich über die Emissionszeit. Das Gesamtvolumen pro Abgabzyklus wird durch die Emmissionsdauer der Laserstraunglungquelle 6 und die Volumenrate bestimmt. Über die Laserleistung der Laserstrahlungsquelle 6 wird die eingetragene Strahlungsintensität und damit die Geschwindigkeit der Temperaturerhöhung der Teilvolumina und damit die Volumenrate beeinflusst. Über eine gleiche Zeitdauer mit einer Laserstrahlung unterschiedlicher Laserleistung beaufschlagte gleich dimensionierte Düsen 4 können somit eine steuerbare unterschiedliche Volumenrate abgeben. Eine steuerbare Volumenrate erlaubt insbesondere die Herstellung von dreidimensionalen Objektven 2 aus verschiedenen Fluiden mit einem einstellbaren Mischungsverhältnis. Dazu werden die Düsen 4 mehrerer Materialspeicher 3 in eine Mischdüse geführt. Die Düsen werden zeitgleich oder auch zeitlich unterschiedlcih mit einer gleichen oder unterschiedlichen Strahlungsintensität gesteuert beaufschlagt. Vorteilhaft wird die Viskoität des austretenden Fluides überwacht, z.B. mittelbar über die Temperaturerfassung des austretenden Fluides und die erfasste Größe als Regelgröße für die Laserstrahlungsquelle 6 genutzt. Damit kann über die geregelte Erwärmung der Düsen 4 ein bestimmtes Mischungsverhältnis der austretenden Fluide erreicht werden.

Die Größe der einzelnen Teilvolumina sind insbesondere davon abhängig, wie groß die Oberfläche ist, an der das Fluid angrenzt.

Hierfür kann die Düse 4 unterschiedlich ausgeführt sein.

Zum einen muss die Laserstrahlung 6.1 in die Düse 4 gut eingekoppelbar sein und zum anderen muss die Düse 4 eine Oberfläche zur Verfügung stellen, an denen ein Teilvolumen des Fliudes angrenzt. Es kann ein umso größeres Teilvolmen zeitgleich erwärmt werden, je größer diese Oberfläche ist. Um so größer ist jedoch auch die geforderte Leistung der Laserstrahlungsquelle 6. Die Vorrichtung ist auf diese Weise gut auf die sonstigen Verfahrensparameter und Randbedingungen anpassbar.

Grundsätzlich ist die Düse 4 wenigstens teilweise in dem Boden 3.1 des Materialspeichers 3 integriert, wie in den Fig. 2a bis 2c gezeigt ist.

In Fig. 2a ist eine Variante gezeigt, bei der die Düse 4 im Wesentlichen durch ein die Düsenöffnung 4.1 umschließendes Kragenstück 4.2 gebildet ist. Damit bildet die Düse 4 teilweise, oder wie hier dargestellt, vollständig den Boden 3.1 des Materialspeichers 3.

In Fig. 2b ist eine Variante gezeigt, bei der die Düse 4 an eine Öffnung im Boden 3.1 des Materialspeichers 3 angrenzt. Die Düse 4 wird hier durch ein die Düsenöffnung 4.1 umschließendes rohrförmiges Endstück 4.3 gebildet und wird z.B. mittels einer Vorrichtung zur Umfangsbearbeitung eines Werkstückes, wie sie aus der EP 2 429 755 B1 bekannt ist, beheizt. Ein Umfangsspiegel 7.2, wie in der vorgenannten EP 2 429 755 B1 offenbart, ist hier um das rohrförmige Endstück 4.3 so angeordnet, dass die eingekoppelte Laserstrahlung 6.1 erst nach mehrfacher Reflexion am Umfangsspiegel 7.2 auf das rohrförmige Endstück 4.3 auftrifft.

Der wesentliche Unterschied eines erfindungsgemäßen Verfahrens zu einem aus dem Stand der Technik bekannten Extrusionsverfahren besteht darin, dass die Abgabe eines Fluides aus einem Materialspeicher 3 über die Düsenöffnung 4.1 einer Düse 4 weder über eine Änderung des auf das Fluid wirkenden Druckes noch durch das Öffnen und Schließen der Düse 4 gesteuert wird. Stattdessen erfolgt die Steuerung der Abgabe des Fluides über eine Temperaturänderung der Düse 4, die mit einer zeitlich und in ihrer Leistung gesteuerten Laserstrahlung 6.1 beaufschlagt wird. Die Düse 4 ist folglich hier eine thermisch schaltbare Düse 4. Während der Einwirkung der Laserstrahlung 6.1 wird die Temperatur der Düse 4 zeit- und leistungsabhängig erhöht und es erhöht sich mit einem vernachlässigbaren Zeitversatz die Temperatur eines an die Düse 4 angrenzenden Teilvolumens des Fluides. Die Viskosität des Fluides sinkt mit dessen Temperaturerhöhung, wodurch sich dessen Fließfähigkeit erhöht. Sobald das Teilvolumen eine Temperatur (nachfolgend Durchlasstemperatur) erreicht hat, bei der die Fließfähigkeit so hoch ist, dass das erwärmte Teilvolumen bei gegebenen Druck und gegebener Größe der Düsenöffnung 4.1 die Düse 4 passieren kann, beginnt der Ausstoß des Teilvolumens. Dieser Prozess setzt sich solange fort, solange die Düse 4 mit Laserstrahlung 6.1 beaufschlagt wird. Da mittels der Einwirkung von Laserstahlung 6.1 der Energieeintrag in die Düse 4 begonnen und beendet wird, kommt es zu einer schlagartigen Temperaturänderung der Düse 4 mit einem steilen Anstieg bzw. Abfall, was fluidisch betrachtet einem Öffnen und Schließen der Düsenöffnung 4.1 gleich kommt. Um den Temperaturabfall zusätzlich zu bescheunigen, steht die Düse 4 vorteilhaft mit einer Kühleinrichtung in Verbindung, die mit Abschalten der Laserstrahlung 6.1 zugeschalten wird.

Die Menge des austretenden Teilvolumens des Fluides hängt von der Durchlassdauer der Düsenöffnung 4.1 und der Durchflussgeschwindigkeit pro Abgabezyklus ab. Letzte wiederum hängt von der Menge des zeitgleich erwärmten Teilvolumens, der Geschwindigkeit der Erwärmung und der Größe der Düsenöffnung 4.1 ab. Je höher die Temperatur des erwärmten Teilvolumens ist, desto geringer wird dessen Viskosität und desto besser ist dessen Fließfähigkeit. Allerdings nimmt mit der Viskosität des Fluides auch die Formstabilität des in Strangform austretenden Fluides ab. Deshalb werden der Druck in dem Materialspeicher 3 und die Düsenöffnung 4.1 so ausgelegt, dass das durch die Düse 4 austretende Teilvolumen in Form eines Fluidstranges noch eine ausreichende Formstabilität aufweist, um beim Auftreffen auf den Objektträger 1 bzw. das dort bereits teilweise angewachsene dreidimensionale Objekt 2 nicht zu zerfließen. Vorteilhaft wird der austretende Fluidstrang unmittelbar nach dem Durchtritt durch die Düse 4 gekühlt, damit sich seine Formstabilität vor dem Auftreffen auf den Objektträger 1 bzw. die Formstabilität des dort bereits anwachsenden dreidimensionalen Objektes 2 wieder erhöht hat.

Die Menge des zeitgleich erwärmten Teilvolumens hängt insbesondere von der Größe der mit dem Fluid in Kontakt stehenden Oberfläche der Düse 4 ab. Je größer diese Oberfläche ist, desto größer ist das angrenzende Volumen des Fluides, welches als Teilvolumen auf die Durchlasstemperatur erwärmt wird. Als Material für die Düse 4 wird ein hochwärmeleitfähiges Material, z.B. Kupfer, verwendet.

Ein möglichst homogener Energieeintrag in die Düse 4 unterstützt eine möglichst homogene Erwärmung der Düse 4 und damit eine homogene Erwärmung der Oberfläche der Düse 4, an der das Teilvolumen angrenzt. Inhomogenitäten der Erwärmung der Düse 4, die bei einer diskreten Beaufschlagung mit der Laserstrahlung 6.1 nicht zu vermeiden sind, werden durch eine schnelle Wärmeleitung innerhalb der Düse 4 ausgeglichen. Sobald das unmittelbar an die Oberfläche angrenzende Teilvolumen auf die Durchlasstemperatur erhöht wurde, bei der die Fließfähigkeit so hoch ist, dass das Fluid bei dem im Materialspeicher 3 anliegenden und auf das Fluid wirkenden Druckes durch die Düsenöffnung 4.1 ausgestoßen wird, gelangt ein neues Teilvolumen zur Anlage an die Oberfläche. Dieser Prozess findet über einen Abgabezyklus kontinuierlich statt, solange Laserstrahlung 6.1 auf die Düse 4 einwirkt.

Die Verfahrensparameter, insbesondere der Druck im Materialspeicher 3 und die Laserleistung, werden so gewählt, dass die vom Teilvolumen aufgenommene Wärme eine Temperaturerhöhung und damit Absenkung der Viskosiät bzw. Erhöhung der Fließfähigkeit bewirkt, bei der das Teilvolumen unter dem vorgegebenen Druck ausgestoßen wird. Das heißt das Teilvolumen wird auf die Durchlasstemperatur erwärmt. Auch ist die Geschwindigkeit der Erwärmung der Düse 4 und damit die "Schaltgeschwindigkeit" durch die auftreffende Strahlungsintensität der Laserstrahlung 6.1 über die Laserleitung ansteuerbar.

Die Erwärmung der Düse 4 ist in der Geschwindigkeit und dem Betrag des Temperaturanstieges über die Parameter der Laserstrahlung 6.1 einfach steuerbar. Das Verfahren ist damit einfach an die Verwendung von Ausgangsmaterialen mit unterschiedlicher temperaturabhängiger Viskosität anpassbar. Die Düse 4 selbst braucht keinerlei mechanisch bewegliche Elemente, sondern kann kompakt aus einem Stück gefertigt sein, wodurch die Düse 4 reinigungsfreundlich und absolut wartungs- und verschleißfrei ist. Da die Düse 4 unabhängig von dem Materialspeicher 3 mittels einer Energiestrahlung erwärmt wird und keine anzusteuernden oder zu schaltenden Bauteile aufweist, die eine Verkablung erfordern würden, ist die Düse 4 schnell gegen eine anders dimensionierte baugleiche Düse austauschbar, um einen Fluidstrang mit einer anderen Düsenquerschnittsgröße und/oder Düsenquerschnittsform auszustoßen.

Als Laserstrahlungsquelle 6 zur Erzeugung der Laserstrahlung 6.1 kommen vorzugsweise Diodenlaser zur Anwendung. Ihre sehr kompakte und robuste Bauweise, ihr einfaches Pumpen mittels elektrischen Strom, ihr vergleichsweise mit anderen Lasern hoher Wirkungsgrad (zwischen 25 - 50%), ihre lange Lebensdauer, ihre Skalierbarkeit in Form von Laserdiodenstacks (optische Leistung von 0,5 - 1kW) oder Laserdiodenbarren (optische Leistung bis 100W) und die Möglichkeit, diese in gepulster oder kontinuierlicher Betriebsart zu betreiben, machen sie für das Verfahren besonders geeignet.

Die Strahlführung von der Strahlungsquelle zur Düse 4 kann auf verschiedene Weise realisiert werden.

In einer Ausführung erfolgt die Strahlführung freistrahlend, wobei die Laserstrahlung 6.1 direkt oder über ein optisch abbildentes System 7.1, wie Kollimations- und Fokussieroptiken, auf die äußere Umfangsfläche der Düse 4 gerichtet wird. In Abhängigkeit der Strahlparameter der Laserstrahlung 6.1, in Kombination mit dem optisch abbildenten System 7.1, kann der Durchmesser des auftreffenden Strahlquerschnittes der Laserstrahlung 6.1 und damit einhergehend die auftreffende Intensität pro Fläche bei einer vorgegebenen Laserleistung festgelegt werden. Durch Variation des auftreffenden Strahlquerschnittes kann die Intensität in ihrer Verteilung auf der Umfangsfläche variiert und eingestellt werden. Vernachlässigt man die Verteilung der Wärme innerhalb der Düse 4, dann werden die Teilvolumina des Fluides schlagartig erhitzt, die unmittelbar an die innere Oberfläche der mit Laserstrahlung 6.1 beaufschlagten Bereiche der Umfangsfläche der Düse 4 angrenzen. Bevorzugt wird die Düse 4 jedoch aus einem hoch wärmeleitfähigen Material hergestellt, sodass sich die eingetragene Wärme innerhalb der Düse 4 gut verteilt und über die innere Oberfläche abgegeben wird. Über das Maß der Ausdehnung der inneren Oberfläche und die Größe der Düsenöffnung 4.1 lässt sich die Größe der pro Zeiteinheit abgegebenen Teilvolumina des Fluides definieren, die für den Bauprozess zur Verfügung stehen soll.

In einer weiteren Ausführung erfolgt die Strahlführung mittels wenigstens eines Strahlrohres 7.3. Das Ende des Strahlrohres 7.3 grenzt an die Düse 4. In die Eintrittsöffnung des Strahlrohres 7.3 wird die Laserstrahlung 6.1, z.B. eines Diodenlasers, eingekoppelt. Die Laserstrahlungsquelle 6 wird so zum Strahlrohr 7.3 positioniert, dass eine Vielfachreflexion der Laserstrahlung 6.1 im Strahlrohr 7.3 stattfindet. Die Rohrlänge wird so definiert, dass durch die Vielfachreflexion der Rohrquerschnitt homogen ausgeleuchtet wird. Dadurch wird ein größerer Bereich der Umfangsfläche der Düse 4 gleichmäßig erwärmt. Die Geometrie des Strahlrohres 7.3 muss nicht zwingend zylindrisch sein. Je nach Aufgabenstellung und Spezifikation kann das Strahlrohr 7.3 jede geometrische Querschnittsform annehmen.

Über die Regelung der Laserleistung kann die Geschwindigkeit geregelt werden, in der das Teilvolumen auf die Durchlasstemperatur erhöht wird. Zum Beispiel kann die ausgekoppelte Laserleistung eines Diodenlasers in Abhängigkeit der Stromstärke sehr genau eingestellt werden. Ist die Schwellstromgrenze überschritten, ist die Abhängigkeit zwischen Stromstärke und Laserleistung nahezu linear.

Mit dem erfindungsgemäßen Verfahren können nicht nur die Volumenrate und die Dauer jeweils eines Abgabezyklus gesteuert werden, sondern es können sehr kurze Schaltzeiten und damit eine sehr hohe Schaltfrequenz realisiert werden.

Durch die Möglichkeit des sehr hohen Energeieintrages kann das Verfahren nicht nur auf Kunststoffe angewendet werden, sondern auch auf höher schmelzende Materialien wie zum Beispiel Glas, dessen Viskosität stark temperaturabhängig ist. Je stärker die Viskosität von der Temperatur abhängig ist, desto besser ist ein Material für das erfindungsgemäße Verfahren geeignet.

Wie bereits erläutert kann die Düse 4 auch über Mittel zur Kühlung verfügen, die ein schnelleres thermisches Schließen der Düse 4 stützen. Darüberhinaus kann auf das ausgestoßene Material eine Kühlung wirken, damit es mit einer Mindestformstabilität auf dem Objektträger 1, bzw. auf bereits vorhandene Lagen des aufzubauenden dreidimensionalen Objektes 2 auftrifft. Insbesondere bei einer Verarbeitung von Glas kann es darüberhinaus vorteilhaft sein, wenn das ausgestoßene Material unter einem vorgegebenen Zeitregime abgekühlt wird, um das Einbringen von Spannungen in das entstehende dreidimensionale Objekt 2 zu vermeiden. Hierzu könnte der Objektträger 1 beheizbar sein und/oder der Objektträger 1 in einer temperierbaren Kammer angeordnet sein, sodass die Abkühlung zeitlich steuer- oder regelbar ist.

### Bezugszeichenliste

- 1: Objektträger
- 2: dreidimensionales Objekt
- 3: Materialspeicher
- 3.1: Boden
- 4: Düse
- 4.1: Düsenöffnung
- 4.2: Kragenstück
- 4.3: rohrförmiges Endstück
- 5: Steuermittel
- 6: Laserstrahlungsquelle
- 6.1: Laserstrahlung
- 7: strahlübertragende Einheit
- 7.1: abbildendes System
- 7.2: Umfangsspiegel
- 7.3: Strahlrohr

## Patentansprüche

1. Verfahren zum generativen Herstellen eines dreidimensionalen Objektes (2) aus einem durch Abkühlung verfestigbaren Material mit einer temperaturabhängigen Viskosität, bei dem das durch Abkühlung verfestigbare Material als Fluid in wenigstens einem Materialspeicher (3), der eine Düse (4) mit einer Düsenöffnung (4.1) aufweist, bei einer vorgegebenen Temperatur und unter einem vorgegebenen Druck gehalten wird und die Düse (4) und ein Objektträger (1), auf dem das dreidimensionale Objekt (2) hergestellt werden soll, zueinander relativ dreidimensional bewegt werden, wobei steuerbar durch die Düsenöffnung (4.1) der Düse (4) Teilvolumina des Fluides auf den Objektträger (1)
abgegeben wird,
wobei zum Zweck der gesteuerten Abgabe der Teilvolumina des Fluides die Düse (4) unabhängig vom Materialspeicher (3) mit wenigstens einer strahlübertragenenden Einheit beheizt wird, sodass mittels eines zeitlich und/oder leistungsgesteuerten Energieeintrages durch eine Laserstrahlung (6.1) wenigstens einer Laserstrahlungsquelle (6) die Temperatur eines Teilvolumens des Fluides auf eine Durchlasstemperatur oberhalb der vorgegebenen Temperatur erhöht wird, bei der die Viskosität des an der Düse (4) angrenzenden Teilvolumens so gering ist, dass das Teilvolumen unter dem vorgegebenen Druck durch die Düsenöffnung (4.1) ausgestoßen wird.

2. Verfahren zum generativen Herstellen eines dreidimensionalen Objektes (2) aus einem durch Abkühlung verfestigbaren Material mit einer temperaturabhängigen Viskosität nach Anspruch 1 **dadurch gekennzeichnet, dass** der gesteuerte Energieeintrag über die Steuerung der Laserleistung der wenigstens einen Laserstrahlungsquelle (6) erfolgt, um über die Höhe der in die Düse (4) eingetragenen Strahlungsintensität die Geschwindigkeit der Aufheizung des Teilvolumens zu beeinflussen.

3. Verfahren zum generativen Herstellen eines dreidimensionalen Objektes (2) aus einem durch Abkühlung verfestigbaren Material mit einer temperaturabhängigen Viskosität nach Anspruch 1 oder 2 **dadurch gekennzeichnet, dass** der gesteuerte Energieeintrag über die Steuerung der Emissionsdauer der Laserstrahlungsquelle (6) erfolgt, sodass ununterbrochen eine Vielzahl von Teilvolumina ausgestoßen werden.

4. Verfahren zum generativen Herstellen eines dreidimensionalen Objektes (2) aus einem durch Abkühlung verfestigbaren Material mit einer temperaturabhängigen Viskosität nach einem der Ansprüche 1 bis 3 **dadurch gekennzeichnet, dass** zeitgleich die Düsen (4) mehrerer Materialspeicher (3) jeweils mit der Laserstrahlung (6.1) beaufschlagt werden und über deren Düsenöffnungen (4.1) jeweils Teilvolumina in eine Mischdüse ausgestoßen werden.

5. Verfahren zum generativen Herstellen eines dreidimensionalen Objektes (2) aus einem durch Abkühlung verfestigbaren Material mit einer temperaturabhängigen Viskosität nach Anspruch 4, **dadurch gekennzeichnet, dass** über die einzelnen Düsenöffnungen (4.1) unterschiedlich große Teilvolumina abgegeben werden, was über einen unterschiedlichen Energieeintrag in die jeweiligen Düsen (4) gesteuert wird und wodurch ein Mischungsverhältnis einstellbar ist.

6. Verfahren zum generativen Herstellen eines dreidimensionalen Objektes (2) aus einem durch Abkühlung verfestigbaren Material mit einer temperaturabhängigen Viskosität nach einem der Ansprüche 1 bis 5, **dadurch gekennzeichnet, dass** die durch die Düsenöffnung (4.1) ausgetretenen Teilvolumina gekühlt werden, bevor sie auf dem Objektträger (1) oder dem dort sich aufbauenden dreidimensionalen Objekt (2) auftreffen.

7. Verfahren zum generativen Herstellen eines dreidimensionalen Objektes (2) aus einem durch Abkühlung verfestigbaren Material mit einer temperaturabhängigen Viskosität nach einem der Ansprüche 1 bis 5, **dadurch gekennzeichnet, dass** die Temperatur der Düse (4) oder der Düsen (4) erfasst wird und als Regelgröße für die Steuerung des jeweiligen Energieeintrages verwendet wird, womit die Volumenrate des abgegebenen Fluides pro Düse (4) geregelt wird.

## Claims

1. A method for the generative production of a three-dimensional object (2) from a material which can be solidified by cooling and which has a temperature-dependent viscosity, wherein the material which can be solidified by cooling is kept as a fluid in at least one material reservoir (3) which has a nozzle (4) with a nozzle opening (4.1), at a predetermined temperature and under a predetermined pressure, and the nozzle (4) and an object carrier (1), on which the three-dimensional object (2) is to be produced, are moved three-dimensionally relative to one another, partial volumes of the fluid being discharged onto the object carrier (1) in a controllable manner through the nozzle opening (4.1) of the nozzle (4),
wherein, for the purpose of the controlled discharge of the partial volumes of the fluid, the nozzle (4) is heated independently of the material reservoir (3) by at least one radiation-transmitting unit so that, by means of a temporally and/or power-controlled energy input by a laser radiation (6.1) from at least one laser radiation source (6), the temperature of a partial volume of the fluid is raised to a passage temperature above the predetermined temperature, at which the viscosity of the partial volume adjacent to the nozzle (4) is so low that the partial volume is ejected through the nozzle opening (4.1) under the predetermined pressure.

2. The method for the generative production of a three-dimensional object (2) from a material which can be solidified by cooling and which has a temperature-dependent viscosity according to claim 1, **characterised in that** the controlled energy input is effected by controlling the laser power of the at least one laser radiation source (6) in order to influence the speed of the heating of the partial volume via the level of the radiation intensity introduced into the nozzle (4).

3. The method for the generative production of a three-dimensional object (2) from a material which can be solidified by cooling and which has a temperature-dependent viscosity according to claim 1 or 2, **characterised in that** the controlled energy input is effected by controlling the emission duration of the laser radiation source (6) so that a plurality of partial volumes are ejected continuously.

4. The method for the generative production of a three-dimensional object (2) from a material which can be solidified by cooling and which has a temperature-dependent viscosity according to any one of claims 1 to 3, **characterised in that** the nozzles (4) of a plurality of material reservoirs (3) are each simultaneously acted upon by the laser radiation (6.1) and partial volumes are in each case ejected into a mixing nozzle via their nozzle openings (4.1).

5. The method for the generative production of a three-dimensional object (2) from a material which can be solidified by cooling and which has a temperature-dependent viscosity according to claim 4, **characterised in that** partial volumes of different sizes are discharged via the individual nozzle openings (4.1), which is controlled via a different energy input into the respective nozzles (4) and which allows a mixing ratio to be adjusted.

6. The method for the generative production of a three-dimensional object (2) from a material which can be solidified by cooling and which has a temperature-dependent viscosity according to any one of claims 1 to 5, **characterised in that** the partial volumes which emerge through the nozzle opening (4.1) are cooled before they impinge on the object carrier (1) or the three-dimensional object (2) building up thereon.

7. The method for the generative production of a three-dimensional object (2) from a material which can be solidified by cooling and which has a temperature-dependent viscosity according to any one of claims 1 to 5, **characterised in that** the temperature of the nozzle (4) or of the nozzles (4) is detected and is used as a controlled variable for controlling the respective energy input, thereby controlling the volume rate of the fluid discharged per nozzle (4).

## Revendications

1. Procédé de fabrication additive d'un objet tridimensionnel (2) en une matière pouvant être solidifiée par refroidissement et présentant une viscosité dépendant de la température, dans lequel la matière pouvant être solidifiée par refroidissement est maintenue, sous forme de fluide dans au moins un réservoir de matière (3), qui comporte une buse (4) avec une ouverture de buse (4.1), à une température prédéterminée et sous une pression prédéterminée, et la buse (4) et un porte-objet (1), sur lequel l'objet tridimensionnel (2) doit être fabriqué, sont déplacés l'un par rapport à l'autre dans les trois dimensions, des volumes partiels du fluide étant délivrés de manière commandée sur le porte-objet (1) à travers l'ouverture de buse (4.1) de la buse (4),
la buse (4) étant chauffée indépendamment du réservoir de matière (3) par au moins une unité de transmission de rayonnement dans le but de la distribution contrôlée des volumes partiels du fluide, de sorte qu'au moyen d'un apport d'énergie contrôlé dans le temps et/ou en puissance par un rayonnement laser (6.1) d'au moins une source de rayonnement laser (6), la température d'un volume partiel du fluide est augmentée jusqu'à une température de passage supérieure à la température prédéfinie, à laquelle la viscosité du volume partiel adjacent à la buse (4) est suffisamment faible pour que le volume partiel soit éjecté à travers l'ouverture de la buse (4.1) sous la pression prédéfinie.

2. Procédé de fabrication additive d'un objet tridimensionnel (2) en une matière pouvant être solidifiée par refroidissement et présentant une viscosité dépendant de la température selon la revendication 1, **caractérisé en ce que** l'apport d'énergie contrôlé s'effectue par le biais de la commande de la puissance du laser de ladite au moins une source de rayonnement laser (6), afin d'influencer la vitesse de chauffage du volume partiel par le biais du niveau de l'intensité du rayonnement introduit dans la buse (4).

3. Procédé de fabrication additive d'un objet tridimensionnel (2) en une matière pouvant être solidifiée par refroidissement et présentant une viscosité dépendant de la température selon la revendication 1 ou 2, **caractérisé en ce que** l'apport d'énergie contrôlé s'effectue par le biais de la commande de la durée d'émission de la source de rayonnement laser (6), de sorte qu'une pluralité de volumes partiels est éjecté sans interruption.

4. Procédé de fabrication additive d'un objet tridimensionnel (2) en une matière pouvant être solidifiée par refroidissement et présentant une viscosité dépendant de la température selon l'une quelconque des revendications 1 à 3, **caractérisé en ce que** simultanément, les buses (4) de plusieurs réservoirs de matière (3) sont respectivement alimentées par le rayonnement laser (6.1) et des volumes partiels sont respectivement éjectés dans une buse de mélange à travers leurs ouvertures de buse (4.1).

5. Procédé de fabrication additive d'un objet tridimensionnel (2) en une matière pouvant être solidifiée par refroidissement et présentant une viscosité dépendant de la température selon la revendication 4, **caractérisé en ce que** des volumes partiels de tailles différentes sont délivrés par les différentes ouvertures de buse (4.1), ce qui est contrôlé par un apport d'énergie différent dans les buses (4) respectives et ce qui permet de régler un rapport de mélange.

6. Procédé de fabrication additive d'un objet tridimensionnel (2) en une matière pouvant être solidifiée par refroidissement et présentant une viscosité dépendant de la température selon l'une quelconque des revendications 1 à 5, **caractérisé en ce que** les volumes partiels sortant par l'ouverture de buse (4.1) sont refroidis avant d'arriver sur le porte-objet (1) ou sur l'objet tridimensionnel (2) qui s'y construit.

7. Procédé de fabrication additive d'un objet tridimensionnel (2) en une matière pouvant être solidifiée par refroidissement et présentant une viscosité dépendant de la température selon l'une quelconque des revendications 1 à 5, **caractérisé en ce que** la température de la buse (4) ou des buses (4) est détectée et utilisée comme grandeur réglée pour la commande de l'apport d'énergie respectif, ce qui permet de réguler le débit volumique du fluide délivré par buse (4).
